# FASCICULE DE BREVET EUROPEEN

(11) **EP 0 667 527 B1**
(45) Date de publication et mention de la délivrance du brevet: **10.05.2000**
(21) Numéro de dépôt: 95400205.1
(22) Date de dépôt: 01.02.1995
(51) Int. Cl.: G01N 29/28, G01N 29/26, G01N 29/22

(54) **Dispositif de contrôle non destructif par ultrasons du piquage d'une canalisation circulaire**
Einrichtung zur zerstörungsfreien Ultraschallprüfung einer Abzweigung von einer Rohrleitung mit kreisförmigem Querschnitt
Device for ultrasonic non-destructive testing of a branch of a circular pipe

(30) Priorité: 03.02.1994 FR 9401214
(43) Date de publication de la demande: 16.08.1995
(73) Titulaire: COMPAGNIE GENERALE DES MATIERES NUCLEAIRES, 78140 Velizy Villacoublay (FR)
(72) Inventeur: Deschamps, Jean-Pierre, F-50460 Urville-Nacqueville (FR)
(74) Mandataire: Dubois-Chabert, Guy

(56) Documents cités:
- EP-A- 0 493 146
- DE-A- 3 005 237
- FR-A- 2 359 420
- PATENT ABSTRACTS OF JAPAN vol. 9, no. 289 (P-405) 15 Novembre 1985 & JP-A-60 128 360 (HITACHI SEISAKUSHO KK)
- PATENT ABSTRACTS OF JAPAN vol. 5, no. 104 (P-069) 7 Juillet 1981 & JP-A-56 046 457 (TOSHIBA CORP.) 27 Avril 1981

## Description

### DOMAINE DE L'INVENTION

L'invention concerne le contrôle de l'état des parois d'un piquage d'une canalisation circulaire dont l'accès est difficile ou interdit à un opérateur. Ce type de contrôle est donc robotisé à partir de l'intérieur de la canalisation principale sur laquelle la canalisation circulaire, dont le piquage est à contrôler, est connectée. Une application particulière est destinée au contrôle du piquage de certaines canalisations circulaires de fonctionnement se trouvant au fond d'un tube ou d'un puits de dissolution dans une installation de traitement de produits radioactifs.

### ART ANTERIEUR ET PROBLEME POSE

Dans le cadre du retraitement ou du traitement des éléments de combustible irradiés, les barreaux de combustible sont tout d'abord sectionnés, débarrassés de leur gaine et immergés dans un réactif, qui est généralement de l'acide nitrique chaud. On fait ainsi tomber les fragments de combustible provenant d'une cisaille, ainsi que la poudre d'oxyde, dans un dissolveur. Celui-ci peut se présenter sous la forme d'un puits, c'est-à-dire d'un grand tube vertical contenant un panier immergé dans une solution d'acide nitrique. Le dissolveur comprend plusieurs canalisations nécessaires à son fonctionnement, en particulier pour l'évacuation des vapeurs et gaz de dissolution vers un condenseur et des conduites appartenant à un circuit de vidange de la solution de dissolution vers une cuve de stockage. Il peut comprendre également un circuit de bullage-agitation permettant d'homogénéiser la solution. En d'autres termes, dans le fond du tube de dissolution se trouve au moins un piquage de canalisation de fonctionnement.

Les éventuels entretiens, contrôles et réparations d'un dissolveur, et en particulier de sa partie inférieure ne peuvent se faire qu'au moyen de machines robotisées, l'accès y étant interdit à des personnes humaines, compte tenu du taux d'irradiation de cette zone. Or, dans le cadre d'un éventuel contrôle d'un tel dissolveur, il est nécessaire de contrôler l'état du piquage de certaines canalisations, c'est-à-dire l'état de la paroi du début de cette canalisation. En effet, la connexion de telles canalisations sur la virole principale de la cuve du dissolveur nécessite des soudages mis en oeuvre par apport de matière ou utilisation de manchon de connexion.

Par ailleurs, la demande de brevet français FR-A-2 670 898 décrit un dispositif de contrôle non destructif par ultrasons de tubes à section constante, dans le domaine nucléaire. On y utilise un robot capable de se positionner à l'intérieur d'une canalisation comportant un transducteur à ultrasons pour effectuer la mesure. Une circulation d'eau est assurée à l'intérieur de la canalisation pour immerger cette dernière et le transducteur afin d'assurer le couplage. Toutefois, ce type de dispositif ne permet pas d'explorer un piquage horizontal au fond d'un tube dissolveur. De plus, l'ensemble est complètement immergé dans l'eau.

Le but de l'invention est de remédier à ces inconvénients en proposant un dispositif capable d'explorer l'entrée d'une canalisation horizontale débouchant au fond d'un dissolveur, sans être complètement immergé.

On connaît également, par le document de brevet japonais JP-A-56 046457, un dispositif d'étanchéité pour un appareil pour tester un trou dans un arbre assurant une étanchéité simple et efficace pour un liquide de test dans le trou.

### RESUME DE L'INVENTION

A cet effet, l'objet principal de l'invention est un dispositif de contrôle non destructif par ultrasons d'un piquage d'une canalisation circulaire d'axe déterminé, raccordé à une cuve et d'accès difficile, comportant :
- un support adaptable à une platine de connexion d'un dispositif porteur ;
- un capteur à ultrasons monté sur un arbre tournant par rapport au support autour de l'axe de la canalisation pour contrôler sur les 360° l'état de la paroi de la canalisation ;
- un moteur de mise en rotation du capteur fixé sur le support ;
- deux joints gonflables, montés de part et d'autre du capteur, pour créer une chambre annulaire étanche autour de ce capteur ;
- des moyens de remplissage en liquide de couplage, de préférence de l'eau, de la chambre annulaire ; et
- des moyens de contrôle de la position en rotation du capteur à ultrasons par rapport au support.

Dans le cadre de la mise en rotation du capteur, le dispositif comporte de préférence un système de fin de course pour limiter cette rotation du capteur à ultrasons à 360°.

Dans ce cas, la réalisation principale de ce système fin de course comprend :
- deux butées de fin de course ;
- un système vis/écrou sur l'écrou duquel sont montées les butées de fin de course ;
- deux détecteurs fixes par rapport au support et placé entre les butées de fin de course ;
- un train d'engrenage de contrôle entraînant la vis du système vis/écrou et étant entraîné par le moteur.

Il peut être complété par un système mécanique comprenant une tige filetée, fixe par rapport au support, passant dans l'écrou et comportant deux butées à contre-écrous placées de part et d'autre de l'écrou.

De préférence, les moyens de contrôle de la position angulaire du capteur sont constitués d'un capteur angulaire fixé sur le support et entraîné en rotation par le train d'engrenage de contrôle.

Concernant les moyens de remplissage en fluide de couplage, ils sont des moyens de mise en eau et comportent de préférence :
- une conduite d'arrivée d'eau ;
- un débuleur monté sur la conduite, et
- un filtre à charbon monté en aval du nébuleur.

### LISTE DES FIGURES

L'invention et ses différentes caractéristiques techniques seront mieux comprises à la lecture de la description suivante, accompagnée de deux figures représentant respectivement :
- figure 1, en coupe, le bas d'un dissolveur équipé du dispositif de contrôle selon l'invention,
- figure 2, en coupe, le dispositif de contrôle selon l'invention, installé dans un piquage de canalisation de dissolveur.

### DESCRIPTION DETAILLEE D'UN MODE DE REALISATION

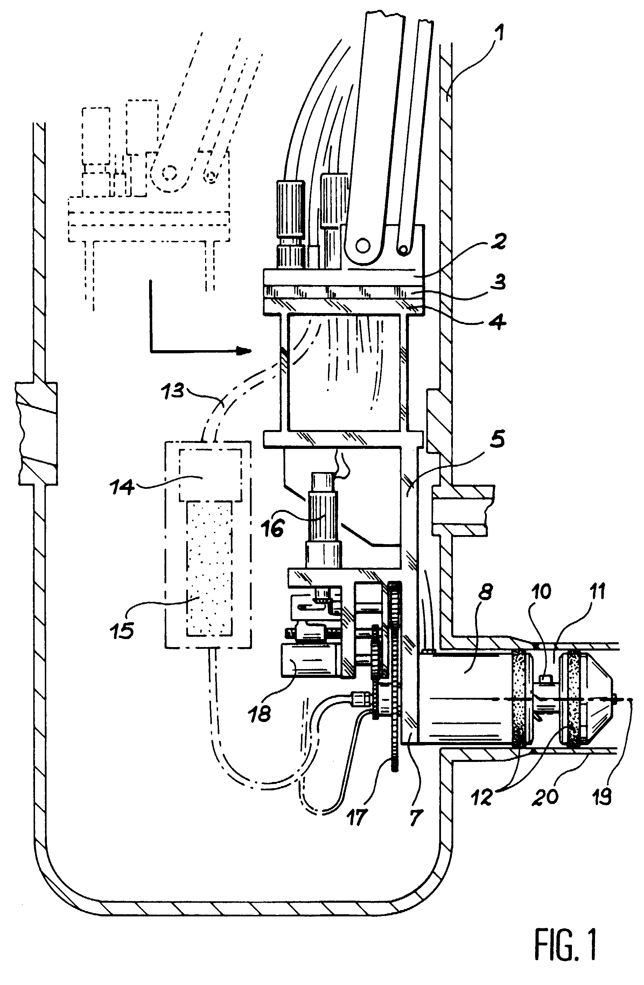

Sur la figure 1, la partie inférieure, c'est-à-dire la cuve 1, d'un dissolveur a été représentée en coupe. A l'intérieur de celle-ci est placé le dispositif de contrôle non destructif par ultrasons selon l'invention. Ce dernier est porté par un dispositif porteur schématisé par sa partie inférieure qui est une platine de connexion 2. Une telle platine comporte différents raccords et éléments de connexion, aussi bien hydrauliques que pneumatiques, électriques ou chimiques. En conséquence, un grand nombre de câbles et canalisations aboutissent à cette platine de connexion 2.

Le dispositif de contrôle selon l'invention est constitué en outre d'un support 5 sur lequel les éléments du dispositif sont fixés. Ce support 5 est fixé à la platine de connexion 2 du dispositif porteur au moyen d'une embase correspondante 4 placée en regard de cette platine de connexion 2. Une platine entretoise 3 est placée entre ces deux éléments et permet d'effectuer les différentes connexions entre cette platine de connexion 2 et cette embase 4.

Ces différents éléments sont représentés dans une position différente en traits interrompus. Ce changement de position est obtenu grâce au dispositif porteur non décrit dans cette demande de brevet, mais grâce auquel le dispositif selon l'invention est porté et introduit dans le dissolveur et positionné dans la canalisation à contrôler.

L'élément opérationnel du dispositif de contrôle non destructif selon l'invention est le capteur à ultrasons 10. Celui-ci est introduit dans la canalisation 20, et plus précisément au niveau de la fixation de celle-ci avec la cuve 1 du dissolveur, c'est-à-dire au niveau de son piquage. A cet effet, le capteur à ultrasons 10 est fixé sur un arbre creux de positionnement 8 lui-même fixé à une partie inférieure 7 du support 5.

Compte tenu du fait que la mesure par ultrasons des parois de la canalisation 20 nécessite l'usage d'un fluide, par exemple de l'eau, pour transmettre les ultrasons, on créé autour de ce capteur 10 une chambre annulaire 11 remplie d'eau et délimitée par la paroi interne de la canalisation 20. A cet effet, on utilise deux joints gonflables 12. Cet équipement est décrit plus en détail dans la suite de la description.

Le dispositif de contrôle selon l'invention comprend également des moyens de mise en rotation de ce capteur à ultrasons. Ces moyens sont constitués principalement d'un moteur 16 monté sur le support 5 et entraînant un train d'engrenages 17 entraînant lui-même en rotation le capteur à ultrasons 10 autour d'un axe de rotation 19 qui est également l'axe de la canalisation 20.

On a également symbolisé sur cette figure 1, par un capteur angulaire 18 un système de fin de course pour contrôler et limiter la rotation du capteur à ultrasons 10. Ces dispositifs seront également décrits en détail plus loin dans la description.

Cette figure 1 montre également un système d'alimentation en eau destinée en remplir la chambre annulaire 11 entourant le capteur 10. Ce système comprend principalement une conduite d'eau 13 reliant l'embase de connexion 4 à la partie arrière de l'arbre de support 8 et se prolongeant vers la chambre annulaire 11. Cette conduite d'eau 13 est avantageusement complétée d'un débulleur 14 suivi d'un filtre à charbon 15.

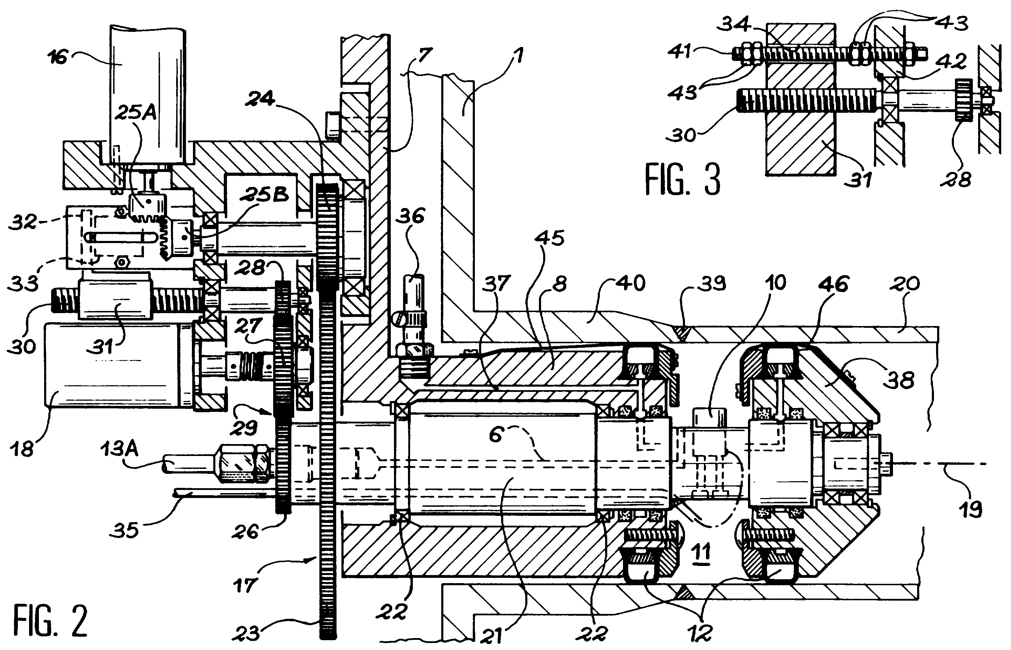

La figure 2 montre plus en détail le dispositif de contrôle selon l'invention. Notamment, sur la partie droite de cette figure 2 est détaillée l'installation du capteur à ultrasons 10.

On constate que ce capteur à ultrasons 10 est placé sur un arbre 21 coaxial avec l'axe de rotation 19 du capteur 10 qui est également l'axe de la canalisation 20. Cet arbre 21 est monté tournant autour de l'axe de rotation 19 par l'intermédiaire de roulements à billes 22 dans l'arbre creux de support 8. Cet arbre 21 est entraîné en rotation par un grand pignon d'entraînement 23, lui-même entraîné en rotation par un petit pignon d'entraînement 24. Ce dernier est lui-même entraîné en rotation par le moteur 16, par l'intermédiaire des deux engrenages 25A et 25B d'un renvoi d'angle, le moteur d'entraînement 16 ayant un axe de rotation vertical dans ce cas de figure. On note le rapport des diamètres des grand et petit pignons, respectivement 23 et 24, dans le but d'obtenir une vitesse de rotation du capteur 10 relativement lente.

Dans le but de contrôler la position du nerf du capteur à ultrasons 10 autour de l'axe de rotation 19, l'arbre 21 est également solidaire d'un premier pignon de contrôle 26 d'un train d'engrenage de contrôle 29. Un deuxième pignon de contrôle 27, entraîné en rotation par le premier pignon de contrôle 26 est solidaire en rotation d'un moyen de contrôle de la position angulaire du capteur 10, en l'occurrence d'un capteur angulaire 18.

Un troisième pignon de contrôle 28 est entraîné également en rotation par le deuxième pignon de contrôle 27 pour entraîner lui-même en rotation une vis 30 d'un système vis/écrou. L'écrou 31 de ce système vis/écrou est donc entraîné en translation.

Une butée de fin course 32 est solidaire de l'écrou 31 et peut donc se translater parallèlement à la vis 30. Un détecteur 33 est placé en regard de cette butée de fin de course 32 et un second détecteur non représenté est placé en regard d'une autre butée de fin de course, non représentée. L'ensemble permet de limiter le déplacement de l'écrou 31 et donc la rotation du capteur à ultrasons 10 autour de l'axe de rotation 19. Ceci constitue un système de fin de course pour la rotation de ce capteur à ultrasons 10.

En référence à la figure 3, ce système peut être doublé d'un système de fin de course mécanique, utilisable au cas où le premier système serait défaillant. On a représenté sur cette figure 3, la vis 30 autour duquel est vissé l'écrou 31. Ce dernier possède un trou 34 à l'intérieur duquel est placée une tige filetée 41. Cette dernière est vissée dans une pièce 42 solidaire du support du dispositif. Deux butées à contre-écrous 43 sont placées de part et d'autre de l'écrou 31 à des endroits déterminés, de manière à limiter les possibilités de déplacement en translation de l'écrou 31 par rapport à la tige filetée 41. Ainsi, le système de fin de course est doublé par un système mécanique.

On note à ce sujet que l'exploration de la canalisation se complète par une translation horizontale du dispositif porteur qui supporte le dispositif de contrôle selon l'invention.

Sur cette figure 2 a été représentée l'extrémité 13A de la conduite d'arrivée d'eau, connectée à l'extrémité gauche de l'arbre 21. Ce dernier est doté d'un canal interne 6 qui le traverse pour déboucher dans la chambre annulaire 11 destinée à être mise en eau.

L'extrémité gauche de l'arbre 21 reçoit également un câble 35 destiné à reporter les signaux d'ultrasons issus du capteur 10 à des tables de contrôle gérées par des opérateurs et placées à l'extérieur de l'enceinte où se trouve le dissolveur. Ce câble à ultrasons 35 traverse également l'arbre 21 pour être connecté au capteur à ultrasons 10.

L'arbre support creux 8 reçoit sur sa périphérie une arrivée d'air comprimé 36. Celle-ci débouche dans un circuit interne 37 d'air comprimé à l'intérieur de l'arbre creux support 8 pour déboucher en regard des joints gonflables 12 placés de part et d'autre du capteur à ultrasons 10, à la périphérie de l'arbre support creux 8. A cet effet, ce dernier se complète d'un embout 38 monté tournant autour de l'extrémité de droite de l'arbre 21. Cet embout 38 porte donc le joint gonflable 12 se trouvant à droite.

La mise en place du dispositif de contrôle selon l'invention se fait par l'intermédiaire d'un dispositif porteur dont seul la platine de connexion 2 a été représenté sur la figure 1.
1°) La première phase consiste donc à descendre le dispositif selon l'invention à l'intérieur du dissolveur et de placer l'embout 38 en regard du piquage de la canalisation 20. Compte tenu du fait que l'ensemble est monté pendulaire, un centrage du dispositif de contrôle, par l'intermédiaire de l'embout 38, est possible dans la canalisation 20.
2° L'ensemble est ensuite translaté dans cette canalisation 20 jusqu'à un endroit de la canalisation qu'il faut contrôler, par exemple une soudure 39 reliant la canalisation 20 à un manchon 40 solidaire de la partie inférieure 1 du dissolveur.
3° On procède ensuite au gonflage des deux joints 12 et au remplissage en eau de la chambre annulaire 11. L'air enfermé s'évacue par des micro-fuites créées par les fils repérés 45 et 46 sur la figure 2 et placés autour des joints 12.
4° Le contrôle de la paroi de la canalisation 20 peut alors avoir lieu à l'aide du capteur à ultrasons 10, celui-ci étant mis en rotation par les différents éléments décrits précédemment.

L'opération se répète autant de fois qu'il est nécessaire, le dispositif de contrôle étant translaté dans la canalisation 20 pour effectuer plusieurs mesures.

Le retrait du dispositif de contrôle selon l'invention se fait par des phases inverses à celles qui viennent d'être mentionnées.

On note donc que ce dispositif de contrôle non destructif permet de vérifier l'état de plusieurs piquage de canalisation au fond d'un dissolveur dont l'accès est strictement proscrit à des opérateurs humains.

## Revendications

1. Dispositif de contrôle non destructif par ultrasons d'un piquage d'une canalisation circulaire (20) d'axe déterminé (19), raccordé à une cuve (1) et d'accès difficile, le dispositif comportant :
- un support (5) adaptable à une platine de connexion (2) d'un dispositif porteur introduit dans la cuve (1) ;
- un capteur à ultrasons (10) monté sur un arbre (21) tournant par rapport au support (5) autour de l'axe de la canalisation (19) pour contrôler sur 360° l'état de la paroi de la canalisation (20) ;
- un moteur (16) de mise en rotation du capteur à ultrasons (10) fixé sur le support (5) ;
- deux joints gonflables (12) montés de part et d'autre du capteur à ultrasons (10) pour créer une chambre annulaire (11) étanche autour du capteur à ultrasons (10) ;
- des moyens de remplissage de liquide de couplage de la chambre annulaire (11) ; et
- des moyens de contrôle (18, 29) de la position angulaire du capteur à ultrasons (10) par rapport au support (5).

2. Dispositif selon la revendication 1, caractérisé en ce que le capteur à ultrasons (10) est situé sur un arbre tournant (21) disposé dans un arbre creux (8) fixé au support (5), un embout (38) est placé au bout de l'arbre tournant (21) et est monté tournant autour dudit arbre tournant (21), l'un des joints gonflables (12) étant situé sur l'arbre creux (8) et l'autre des joints gonflables (12) étant situé sur l'embout (38), et en ce qu'il comprend un circuit de gonflage (36, 37) comprenant une partie interne (37), s'étendant dans l'arbre creux (8), l'arbre tournant (21) et l'embout.

3. Dispositif selon la revendication 1 ou 2, caractérisé en ce que les moyens de remplissage en fluide de couplage sont des moyens de mise en eau de la chambre annulaire (11) et comprennent :
- une conduite d'arrivée d'eau (13) ;
- un débulleur (14) monté sur la conduite d'arrivée d'eau (13) ;
- un filtre à charbon (15) monté en aval du débulleur (14) ; et
- un canal interne (6) dans l'arbre (21).

4. Dispositif selon la revendication 1, 2 ou 3, caractérisé en ce que les moyens de contrôle sont constitués principalement d'un capteur angulaire (18) fixé sur le support (7) et entraîné en rotation par le train d'engrenage de contrôle (29).

5. Dispositif selon la revendication 1, caractérisé en ce qu'il comprend un système de fin de course (31, 32, 33, 41, 43) pour limiter la rotation du capteur à ultrasons (10) à 360°.

6. Dispositif selon la revendication 5, caractérisé en ce que le système de fin de course comprend :
- deux butées de fin de course (32) ;
- un système vis/écrou (30, 31) sur l'écrou (31) duquel sont montées les butées de fin de course (32) ;
- deux détecteurs (33) fixes par rapport au support (5) et placés entre les butées de fin de course (32) ;
- un train d'engrenages de contrôle (29) entraînant la vis (30) du système vis/écrou et étant entraîné par le moteur (16).

7. Dispositif selon la revendication 5, caractérisé en ce que le système de fin de course est complété par un système mécanique comprenant une tige filetée (41) fixe par rapport au support (5), passant dans l'écrou (31) et comportant deux butées à contre-écrous (43) placées de part et d'autre de l'écrou (31).

## Claims

1. Device for ultrasonic non-destructive inspection of a tap connection onto a circular pipe (20), of defined axis (19), which is connected to a tank (1) and is difficult to access, the device comprising:
- a support (5) which can be fitted to a connection plate (2) of a carrier device introduced into the tank (1);
- an ultrasonic sensor (10) mounted on a shaft (21) which rotates with respect to the support (5) about the pipe axis (19) in order to allow 360° inspection of the state of the wall of the pipe (20);
- a motor (16), fastened to the support (5), for rotating the ultrasonic sensor (10);
- two inflatable seals (12) mounted on either side of the ultrasonic sensor (10) in order to create a sealed annular chamber (11) around the ultrasonic sensor (10);
- means for filling the annular chamber (11) with coupling liquid; and
- means (18, 29) for checking the angular position of the ultrasonic sensor (10) with respect to the support (5).

2. Device according to Claim 1, characterized in that the ultrasonic sensor (10) is located on a rotating shaft (21) placed inside a hollow shaft (8) fastened to the support (5), and an end-piece (38) is placed at the end of the rotating shaft (21) and is mounted so as to rotate about the said rotating shaft (21), one of the inflatable seals (12) being located on the hollow shaft (8) and the other of the inflatable seals (12) being located on the end-piece (38) and in that it comprises an inflation circuit (36, 37) which includes an internal part (37), extending in the hollow shaft (8), the rotating shaft (21) and the end-piece.

3. Device according to Claim 1 or 2, characterized in that the means for filling with coupling fluid are means for filling the annular chamber (11) with water and they comprise:
- a water inlet hose (13);
- an out-gassing device (14) mounted on the water inlet hose (13);
- a carbon filter (15) mounted downstream of the out-gassing device (14); and
- an internal channel (6) inside the shaft (21).

4. Device according to Claim 1, 2 or 3, characterized in that the checking means consist mainly of an angle sensor (18) fastened to the support (7) and rotated by the control gear train (29).

5. Device according to Claim 1, characterized in that it comprises an end-of-travel system (31, 32, 33, 41, 43) for limiting the rotation of the ultrasonic sensor (10) to 360°.

6. Device according to Claim 5, characterized in that the end-of-travel system comprises:
- two end-of-travel stops (32);
- a screw/nut system (30, 31), on the nut (31) of which the end-of-travel stops (32) are mounted;
- two detectors (33) which are fixed with respect to the support (5) and placed between the end-of-travel stops (32);
- a control gear train (29) driving the screw (30) of the screw/nut system and being driven by the motor (16).

7. Device according to Claim 5, characterized in that the end-of-travel system is completed by a mechanical system comprising a threaded rod (41) which is fixed with respect to the support (5), passes through the nut (31) and includes two stop nuts (43) placed on either side of the nut (31).

## Patentansprüche

1. Vorrichtung zur zerstörungsfreien Ultraschallprüfung einer Rohrleitungsabzweigung mit kreisförmigem Querschnitt (20) und einer bestimmten Achse (19), verbunden mit einem Behälter (1) und schwer zugänglich, wobei die Vorrichtung umfasst:
- einen Halter (5), anpassbar an eine Verbindungsplatte (2) einer in den Behälter (1) eingeführten Trageinrichtung;
- einen Ultraschall-Sensor (10), auf eine in Bezug auf den Halter (5) um die Rohrleitungsachse (19) drehbare Achse (21) montiert, um den Zustand der Leitung (20) über 360° zu prüfen;
- einen Motor (16), um den an dem Halter (5) befestigten Ultraschall-Sensor (10) in Drehung zu versetzen;
- zwei aufblasbare Dichtungen (12), beiderseits des Ultraschall-Sensors (10) montiert, um eine Ringkammer (11) zu schaffen, um den Ultraschall-Sensor (10) herum;
- Einrichtungen zum Einfüllen von Kopplungsflüssigkeit in die Ringkammer (11); und
- Einrichtungen (18, 29) zur Kontrolle der Winkelstellung des Ultraschall-Sensors (10) in Bezug auf den Halter (5).

2. Vorrichtung nach Anspruch 1, dadurch gekennzeichnet, dass der Ultraschall-Sensor (10) sich auf der drehbaren Achse (21) befindet, angeordnet in einer an dem Halter (5) befestigten hohlen Achse (8), wobei ein Ansatz (38) sich am Ende der drehbaren Achse (21) befindet und drehbar montiert ist, um die genannte drehbare Achse (21) herum, und sich eine der aufblasbaren Dichtungen (12) auf der hohlen Achse (8) befindet und die andere der aufblasbaren Dichtungen (12) sich auf dem Ansatz (38) befindet, und dadurch, dass sie eine Aufblasleitung (36, 37) umfasst, die einen inneren Teil (37) aufweist, der sich in der hohlen Achse (8), der drehbaren Achse (21) und dem Ansatz erstreckt.

3. Vorrichtung nach einem der Ansprüche 1 oder 2, dadurch gekennzeichnet, dass die Kopplungsfluid-Einfülleinrichtungen Einrichtungen zum Füllen der Ringkammer (11) mit Wasser sind, die umfassen:
- eine Wasserzuführungsleitung (13);
- einen Blasenabscheider (14), in die Wasserzuführungsleitung (13) montiert;
- ein Kohlefilter (15), nach dem Blasenabscheider (14) montiert; und
- einen Innenkanal (6) in der Achse (21).

4. Vorrichtung nach Anspruch 1, 2 oder 3, dadurch gekennzeichnet, dass die Kontrolleinrichtungen hauptsächlich durch einen Winkelgeber (18) gebildet werden, befestigt an dem Träger (7) und in Drehung versetzt durch den Kontrollgetriebezug (29).

5. Vorrichtung nach Anspruch 1, dadurch gekennzeichnet, dass es ein Endstellungssystem (31, 32, 33, 41, 43) umfasst, um die Drehung des Ultraschall-Sensors (10) auf 360° zu begrenzen.

6. Vorrichtung nach Anspruch 5, dadurch gekennzeichnet, dass das Endstellungssystem umfasst:
- zwei Endanschläge (32);
- ein Schraube/Mutter-System (30, 31), wobei die Endanschläge (32) auf die Mutter (31) montiert sind;
- zwei bezüglich des Halters (5) feststehende Detektoren (33), angeordnet zwischen den Endstellungsanschlägen (32);
- einen Kontrollgetriebezug (29), der die Schraube (30) des Schraube/Mutter-Systems antreibt und durch den Motor (16) angetrieben wird.

7. Vorrichtung nach Anspruch 5, dadurch gekennzeichnet, dass das Endstellungssystem durch ein mechanisches System vervollständigt wird, das eine in Bezug auf den Halter (5) feststehende Gewindestange (41) umfasst, die die Mutter (31) durchquert und zwei Kontermutternanschlägen (43) trägt, beiderseits der Mutter (31) angeordnet.
